# EUROPÄISCHE PATENTSCHRIFT

(11) **EP 3 496 887 B1**
(45) Veröffentlichungstag und Bekanntmachung des Hinweises auf die Patenterteilung: **01.05.2024**
(21) Anmeldenummer: 18713927.4
(22) Anmeldetag: 28.03.2018
(51) Int. Cl.: B23C 5/20, B23C 5/06

(54) **SCHNEIDEINSATZ UND WERKZEUG ZUR SPANENDEN BEARBEITUNG EINES WERKSTÜCKS**
CUTTING INSERT AND TOOL FOR MACHINING A WORKPIECE
PLAQUETTE DE COUPE ET OUTIL POUR L'USINAGE D'UNE PIÈCE PAR ENLÈVEMENT DE COPEAUX

(30) Priorität: 27.04.2017 DE 102017109098
(43) Veröffentlichungstag der Anmeldung: 19.06.2019
(73) Patentinhaber: Hartmetall-Werkzeugfabrik Paul Horn GmbH, 72072 Tübingen (DE)
(72) Erfinder: STARK, Christian, 72108 Rottenburg (DE)
(74) Vertreter: Witte, Weller & Partner Patentanwälte mbB
(86) Internationale Anmeldenummer: PCT/EP2018/057891
(87) Internationale Veröffentlichungsnummer: WO 2018/197141

(56) Entgegenhaltungen:
- EP-A2- 0 104 517
- DE-A1-102012 017 024
- DE-A1-102012 108 751
- US-A- 5 158 401
- US-A1- 2007 292 219
- US-A1- 2009 155 004
- US-A1- 2011 052 337
- US-A1- 2012 027 530

## Beschreibung

Die vorliegende Erfindung betrifft einen Schneideinsatz, insbesondere einen Tangentialschneideinsatz, für ein Werkzeug zur spanenden Bearbeitung eines Werkstücks nach dem Oberbegriff des Anspruchs 1. Ein solcher Schneideinsatz ist aus der EP 0 104 517 A2 bekannt. Des Weiteren betrifft die vorliegende Erfindung ein Werkzeug zur spanenden Bearbeitung eines Werkstücks, insbesondere zum Tangentialfräsen, mit einem solchen Schneideinsatz und einem Werkzeughalter, welcher mindestens eine Schneideinsatzaufnahme aufweist, in der der Schneideinsatz lösbar befestigt ist.

Weitere beispielhafte Schneideinsätze sind aus der DE 10 2012 108 752 B3, der US 2009/155004 A1, der US 5,158,401 A, der US 2011/052337 A1 und der US 2012/027530 A1 bekannt.

Schneideinsätze der vorliegenden Art, welche allgemein auch als Wendeschneidplatten oder im Speziellen als Tangentialschneideinsätze bezeichnet werden, kommen meist bei Anwendungen zur Metallbearbeitung, insbesondere bei Fräs- oder Drehanwendungen, zum Einsatz. Hauptsächlich werden die vorliegenden Schneideinsätze zum Tangentialfräsen eingesetzt. Fräswerkzeuge, bei denen derartige Schneideinsätze zum Einsatz kommen, umfassen typischerweise einen rotationssymmetrischen Werkzeughalter, an dem umfangsseitig zumindest eine, meist jedoch eine Vielzahl dieser Schneidsätze lösbar befestigt sind.

Das Abtragen von Material am Werkstück während des Fräsvorgangs wird durch hochpräzise Schneiden bzw. Schneidkanten, welche in die Schneideinsätze eingeformt sind, gewährleistet. Um den Verschleiß möglichst gering zu halten, den sehr hohen bei der Verarbeitung auftretenden Schnittkräften standzuhalten und eine möglichst hohe Präzision zu gewährleisten, werden diese Schneideinsätze zumeist aus Hartmetall hergestellt. Durch die hohe Materialbeanspruchung verschleißen die Schneidkanten dennoch im Laufe der Zeit. Insbesondere bei Fräsbearbeitungen, die eine hohe Präzision voraussetzen, müssen die Schneideinsätze daher nach einer gewissen Zeit ausgetauscht werden.

Um zu verhindern, dass die relativ teuren Schneideinsätze jedes Mal gesamthaft ausgetauscht werden müssen, wenn die Schneiden verschlissen sind, wurden mehrseitige Schneideinsätze entwickelt, welche mehrere symmetrisch zueinander angeordnete Schneiden aufweisen. Eine solche Wendeschneidplatte mit vier identischen, symmetrisch zueinander angeordneten Hauptschneidkanten ist beispielsweise aus der EP 1 572 407 B1 bekannt.

Die darin gezeigte Wendeschneidplatte ist bezüglich ihrer drei Hauptachsen jeweils 180° drehsymmetrisch ausgebildet. Sobald die verwendete Hauptschneidkante verschlissen ist, lässt sich die Wendeschneidplatte daher um 180° drehen und/oder wenden und in der neuen Position im Werkzeughalter befestigen. Beim Verschleiß einer der vier Hauptschneidkanten muss somit die Wendeschneidplatte nicht gesamthaft ausgetauscht werden, sondern nur im Halter gedreht bzw. gewendet werden, so dass die Bearbeitung mit den bisher nicht verwendeten, unverschlissenen Hauptschneidkanten fortgesetzt werden kann.

Aufgrund der Symmetrieeigenschaften der Wendeschneidplatte, bei der jede Hauptschneidkante die gleiche Schneidengeometrie aufweist, werden durch das Wenden bzw. Drehen der Wendeschneidplatte die Schnitteigenschaften nicht verändert. Mit anderen Worten lässt sich somit ein und dieselbe Wendeschneidplatte viermal verwenden, bis alle Schneidkanten verschlissen sind und die Wendeschneidplatte entsorgt werden muss. Dies ist auch bei der aus der DE 10 2012 108 752 B3 bekannten Wendeschneidplatte der Fall. Allerdings sind die vier Hauptschneidkanten hier nicht wie gemäß der EP 1 572 407 B1 auf zwei Seiten der Wendeschneidplatte, sondern auf vier Seiten verteilt, so dass pro Hauptseite jeweils eine Hauptschneidkante vorgesehen ist.

Aus der DE 10 2007 022 536 A1 sowie aus der JP 2008-229744 A sind dreh- und wendbare, achtschneidige Schneideinsätze mit einer im Wesentlichen quadratischen Grundfläche bekannt.

Im Gegensatz zu einfachen, nicht wendbaren Schneideinsätzen bzw. Schneidplatten bieten derartige Wendeschneidplatten eine wesentlich höhere Flexibilität und können, dadurch dass sie mehrfach verwendbar sind, wesentlich länger verwendet werden, ohne dass dies mit Einbußen bei der Bearbeitungsgenauigkeit einhergeht. Wenngleich derartige vierschneidige Wendeschneidplatten deutlich komplexer in der Herstellung sind als herkömmliche, einschneidige (nicht wendbare) Schneidplatten, erweisen sich diese nicht nur als geschickter, sondern in der Gesamtbetrachtung auch als kostengünstiger für deren Abnehmer.

Aus Sicht des Herstellers solcher Wendeschneidplatten besteht die konstruktive Problematik jedoch nicht nur darin, die Symmetrieeigenschaften solcher Wendeschneidplatten mit mehreren identischen Schneidkanten zu realisieren, sondern gleichzeitig auch dafür zu sorgen, dass jede dieser Schneidkanten gleiche Bearbeitungseigenschaften aufweist und dadurch identisch verwendbar ist. Die größte Problematik besteht dabei oft darin, mögliche Kollisionen mit anderen Bauteilen der Schneidplatte oder des Werkzeughalters zu vermeiden und für einen sicheren Sitz der Schneidplatte in der Werkzeugaufnahme des Werkzeughalters zu sorgen, so dass eine optimale Krafteinleitung gewährleistet ist.

Insbesondere muss darauf geachtet werden, dass die zum jeweiligen Zeitpunkt nicht verwendeten Schneidkanten oder übrigen Bauteile der Schneidplatte nicht unerwünscht mit dem Werkstück kollidieren. Es darf also an Stellen der Schneidplatte, die für die spanende Bearbeitung des Werkstücks zum jeweiligen Zeitpunkt nicht verwendet werden sollen, nicht zu Kollisionen mit dem Werkstück kommen. Mit anderen Worten muss also darauf geachtet werden, dass die zum jeweiligen Zeitpunkt nicht verwendeten Schneidkanten freilaufen. Es erscheint einleuchtend, dass derartige Voraussetzungen bei Wendeschneidplatten mit mehreren, wechselweise verwendbaren Schneidkanten schwieriger zu realisieren sind, als dies bei herkömmlichen Schneidplatten mit nur einer Schneidkante der Fall ist.

Die oben erwähnten Symmetrieeigenschaften, der Freilauf der übrigen Schneidkanten sowie die Vermeidung von unerwünschten Kollisionen der Schneidplatte mit dem Werkstück wird bei der aus der EP 1 572 407 B1 bekannten Wendeschneidplatte dadurch gelöst, dass die Wendeschneidplatte zwei Teilkörper aufweist, welche gegenüber einander um eine Hauptachse der Wendeschneidplatte um einen vordefinierten Winkel verdreht sind. Die Hauptschneidkanten sind dabei jeweils zueinander um einen vordefinierten Winkel verdreht. Auf diese Weise lassen sich die geforderten Symmetrie- und Freilaufeigenschaften technisch nachhaltig gewährleisten. Anderseits entstehen bei einer solchen in sich verdrehten Wendeschneidplatte relativ viele komplex geformte Flächen. Insbesondere an den Haupteinsatzflächen entstehen durch eine derartige Verdrehung relativ komplexe Spanflächen, welche technisch sehr anspruchsvoll zu fertigen sind. Eine derart anspruchsvolle Fertigung ist, selbst wenn diese technisch realisierbar sein sollte, mit sehr hohen Fertigungskosten verbunden. Dies führt im Endeffekt zu hohen Stückkosten der Wendeschneidplatten für die Endabnehmer.

Der Erfindung liegt die Aufgabe zugrunde, einen Schneideinsatz der eingangs genannten Art bereitzustellen, der eine Alternative zu den oben genannten, aus dem Stand der Technik bekannten Wendeschneidplatten darstellt.

Erfindungsgemäß wird diese Aufgabe durch einen Schneideinsatz gemäß Anspruch 1 gelöst.

Ähnlich wie der aus der DE 10 2012 108 752 B3 bekannte Schneideinsatz weist der erfindungsgemäße Schneideinsatz ebenfalls zwei im Wesentlichen identische Teilkörper auf, welche entlang einer Mittelebene integral miteinander verbunden sind.

Die Mittelebene wird vorliegend lediglich zur geometrischen Beschreibung des Schneideinsatzes verwendet. Es handelt sich dabei jedoch lediglich um eine gedachte, imaginäre Hilfsebene, welche nicht körperlich vorhanden ist. Die Teilkörper werden vorliegend als "im Wesentlichen identisch" beschrieben. Der Zusatz "im Wesentlichen" wird lediglich deshalb verwendet, da zwar die Gesamtgeometrie der beiden Teilkörper des Schneideinsatzes identisch ist, jedoch kleinere Details, welche keinen direkten Einfluss auf die spanende Bearbeitung haben, von der exakten Identität abweichen können. So weichen die beiden Teilkörper, wenn überhaupt, dann nur durch Markierungen oder Beschriftungen, welche keinen technischen Beitrag leisten, voneinander ab. Beispielsweise können die einzelnen Hauptseiten des Schneideinsatzes unterschiedlich markiert sein, um diese durchzunummerieren.

Ebenso wie der aus der DE 10 2012 108 752 B3 bekannte Schneideinsatz ist auch der erfindungsgemäße Schneideinsatz 180°-drehsymmetrisch bezüglich der Bohrungsachse.

Der wesentliche Unterschied zu dem aus der DE 10 2012 108 752 B3 bekannten Schneideinsatz besteht jedoch darin, dass an jeder der vier identischen Hauptseiten des Schneideinsatzes die Hauptschneidkante mit der an derselben Hauptseite angeordneten Nebenschneidkante in einer gemeinsamen Schneidenebene angeordnet ist, welche parallel zu der jeweils an der selbigen Hauptseite angeordneten Anlagefläche verläuft. Es versteht sich, dass es sich auch bei dieser Schneidenebene, ähnlich wie bei der oben genannten Mittelebene, um eine rein imaginäre Ebene handelt, auf die vorliegend rein zu Beschreibungszwecken verwiesen wird.

Durch die genannte, erfindungsgemäße Art der Anordnung der Haupt- und Nebenschneidkanten in einer gemeinsamen Ebene parallel zu den jeweiligen Anlagefläche entsteht zum einen eine sehr exakte Art der Ausrichtung der einzelnen Schneidkanten relativ zu der jeweiligen Anlagefläche, welche eine einfache und leicht nachvollziehbare Art der Ausrichtung der Haupt- und Nebenschneidkante in Bezug zu dem Werkzeughalter ermöglicht, in dem der Schneideinsatz eingespannt wird. Zum anderen entsteht durch die genannte Art der Ausrichtung eine Art Spanmulde, welche durch die Haupt- und Nebenschneidkante und die jeweils zugehörige Anlagefläche definiert ist. Die Anlagefläche dient somit nicht nur als Teil der Anlage des Schneideinsatzes am Werkzeughalter, sondern gleichzeitig auch als Teil der Spanmulde, innerhalb der sich der Span während der spanabhebenden Bearbeitung bilden kann.

Im Bereich der Nebenschneidkante weist der erfindungsgemäße Schneideinsatz im Gegensatz zu dem aus der DE 10 2012 108 752 B3 bekannten Schneideinsatz also eine Art geschlossene Spanmulde auf. Diese verbessert die Spanbildung. Der abgehobene Span kann dadurch besser aufrollen, wodurch der Spanbruch begünstigt wird und kürzere Späne erzeugt werden können. Dies schlägt sich positiv auf die Oberflächengüte des zu bearbeitenden Werkstücks nieder. Gleichzeitig mindert dies jedoch auch die Belastung der Schneidkanten, wodurch höhere Standzeiten möglich sind. Dies wiederum trägt zu einer verbesserten Wirtschaftlichkeit des Schneideinsatzes bei.

Die verbesserten Spanbildungseigenschaften des erfindungsgemäßen Schneideinsatzes kommen insbesondere (aber nicht nur) zum Tragen, wenn der erfindungsgemäße Schneideinsatz zum Planfräsen eingesetzt wird. Bei einer Bearbeitung des Werkstücks durch Planfräsen wird der Grund der zu fertigenden Geometrie nämlich üblicherweise mit einer der Nebenschneidkanten des Schneideinsatzes bearbeitet.

Bezüglich der vorliegend verwendeten Terminologie sei noch Folgendes angemerkt: Unter einer "geraden" Kante wird vorliegend eine geradlinige, also ungekrümmte Kante verstanden. Unter einer "planaren" Fläche wird eine Ebene, ungekrümmte Fläche verstanden. Unter "quer" wird eine nicht-parallele Ausrichtung zweier Achsen, Kanten oder Ebenen verstanden, welche jeden Winkel ungleich 0° einschließt. "Quer" kann also, muss aber nicht zwangsläufig senkrecht bzw. orthogonal meinen. Unter einer "Kante" wird vorliegend der Übergang zwischen zwei quer zueinander ausgerichteten ebenen Flächen verstanden, welcher winklig sein kann, aber nicht muss. Eine Kante kann auch abgerundet sein. Unter "180°-drehsymmetrisch" wird ein Körper verstanden, welcher sich bei einer Rotation um 180° um eine definierte Achse wiederum auf sich selbst abbildet.

Gemäß einer bevorzugten Ausgestaltung der vorliegenden Erfindung ist jede der vier Hauptschneidkanten jeweils an einem zweiten Ende entweder direkt oder über eine zweite Eckenkante, welche einen Radius und/oder eine Fase aufweist, mit einer Seitenkante verbunden, wobei jede der vier Seitenkanten nicht in der jeweiligen Schneidenebene angeordnet ist, in der die Hauptschneidkante und Nebenschneidkante derselben Hauptseite angeordnet sind.

Jede Hauptschneidkante ist also mit anderen Worten an ihrem ersten Ende über eine erste Eckenkante, welche einen Radius und/oder eine Fase aufweist, mit einer Nebenschneidkante verbunden und an ihrem zweiten, gegenüberliegenden Ende entweder direkt oder über eine zweite Eckenkante mit einer Seitenkante verbunden. Die Seitenkante liegt jedoch nicht in der gemeinsamen Schneidenebene, sondern läuft aus dieser heraus. Diese Seitenkante kommt bei der Verwendung des Schneideinsatzes üblicherweise nicht in Kontakt mit dem zu bearbeitenden Werkstück. Es handelt sich also um keine Schneidkante, mit der das Werkstück spanend bearbeitet wird. Dadurch, dass die Seitenkante aus der Schneidenebene herausläuft, entsteht auf der der Nebenschneidkante jeweils gegenüberliegenden Seite der Hauptschneidkante eine Art Öffnung der oben beschriebenen Spanmulde. Diese Öffnung ermöglicht einen verbesserten Spanfluss, da die vom Werkstück abgehobenen Späne durch diese seitliche Öffnung hindurch abfließen können.

Vorzugsweise ist ein erstes Ende jeder Seitenkante entweder direkt oder über die entsprechende zweite Eckenkante mit der an derselben Hauptseite angeordneten Hauptschneidkante verbunden. Ein gegenüberliegendes zweites Ende jeder Seitenkante ist direkt, über einen Radius und/oder über eine Fase mit einem Rand der an derselben Hauptseite angeordneten Anlagefläche verbunden, wobei die vier Anlageflächen jeweils einen kürzeren Abstand von der Bohrungsachse haben als die vier Schneidenebenen.

Die Seitenkanten verbinden an jeder Hauptseite des Schneideinsatzes somit also jeweils ein seitliches Ende jeder Hauptschneidkante mit der an selbiger Hauptseite angeordneten Anlagefläche. Die Seitenkanten laufen also nach hinten hin weg von der jeweiligen Hauptschneidkante und sorgen somit für die oben genannte einseitige Öffnung der Spanmulde. Vorzugsweise bilden die genannten Seitenkanten jeweils eine Außenkante des Schneideinsatzes, so dass der durch die Spanmuldenöffnung abfließende Span sozusagen direkt ins Freie gelangt. Zudem wird durch diese Ausgestaltung der bei dem erfindungsgemäßen Schneideinsatz vorzugsweise vorgesehene, sogenannte positivziehende Schnitt begünstigt. Von einem positiv ziehenden Schnitt spricht man, wenn die Spanabfuhr über die Spanfläche in Richtung weg von dem abnehmenden Material erfolgt (auch entgegengesetzt zu der bei der Bearbeitung entstehenden Nutwand). Ein solcher positiv-ziehender Schnitt ist im Gegensatz zu dem entgegengesetzt verlaufenden negativziehenden Schnitt im Hinblick auf die Spanbildungseigenschaften von Vorteil.

Gemäß einer weiteren Ausgestaltung der vorliegenden Erfindung ist zwischen jeder Hauptschneidkante und der an derselben Hauptseite jeweils angeordneten Anlagefläche eine planare Spanfläche angeordnet.

Auch diese Spanfläche begünstigt den Spanfluss. Eine planare Spanfläche ist, insbesondere im Vergleich zu einer gekrümmten oder komplex geformten Spanfläche, zudem sehr einfach herstellbar.

Gemäß einer weiteren Ausgestaltung ist an jeder Hauptseite eine zumindest teilweise umlaufende Fase angeordnet, welche sich durchgängig entlang der an der jeweiligen Hauptseite angeordneten zweiten Eckenkante, der Hauptschneidkante, der ersten Eckenkante und der Nebenschneidkante erstreckt und an die an derselben Hauptseite angeordnete Spanfläche angrenzt.

Die genannte Fase bildet eine Art Schutzfase. Die Schutzfase kann entweder als eckige bzw. abgeschrägte Fase oder als abgerundeter Radius ausgestaltet sein.

Gemäß einer weiteren bevorzugten Ausgestaltung der Erfindung schneidet die imaginäre Mittelebene alle vier Anlageflächen, so dass ein Teil jeder Anlagefläche zu dem ersten Teilkörper gehört und ein anderer Teil jeder Anlagefläche zu dem zweiten Teilkörper gehört.

Die Anlageflächen sind demnach also relativ groß ausgestaltet, was eine einfache Art der Gestaltung des Plattensitzes im Werkzeug ermöglicht. Ebenso begünstigt diese relativ große Ausgestaltung der Anlageflächen eine einfachere Herstellung des Schneideinsatzes, da die planaren Anlageflächen zu einer Vereinfachung der Gesamtgeometrie auch im Hinblick auf die erforderlichen Symmetrieeigenschaften beitragen.

Gemäß einer weiteren Ausgestaltung weist jede der vier Anlageflächen jeweils zwei planare Teilflächen auf, welche durch eine Vertiefung voneinander getrennt sind.

Die beiden Teilflächen jeder Anlagefläche werden durch die jeweilige Vertiefung vorzugsweise vollständig voneinander getrennt. Dies ermöglicht einen mechanisch stabilen Plattensitz, da der Schneideinsatz in der Art einer Zwei-Punkt- bzw. Zwei-Flächen-Anlage am Werkzeughalter definiert anliegt. Im Übrigen ist es möglich, innerhalb der Vertiefung eine Markierung vorzusehen, durch welche die jeweilige Hauptseite nummeriert bzw. gekennzeichnet ist.

Erfindungsgemäß weist der Schneideinsatz an jeder Hauptseite jeweils einen ersten und einen zweiten Vorsprung auf, die auf gegenüberliegenden Seiten der jeweiligen Hauptseite angeordnet sind und gegenüber der Anlagefläche der jeweiligen Hauptseite hervorsteher, wobei an jedem der ersten Vorsprünge jeweils die Eckenkante und die Nebenschneidkante der benachbarten Hauptseite angeordnet sind.

Diese Vorsprünge werden bei dem erfindungsgemäßen Schneideinsatz dafür verwendet, dass an den Nebenschneidkanten Freiwinkel entstehen, welche die notwendigen Freilaufeigenschaften des Schneideinsatzes garantieren sollen. In die beiden Vorsprünge sind also mit anderen Worten jeweils die für die während der Bearbeitung geforderten Freilaufeigenschaften des Schneideinsatzes notwendigen Freiwinkel eingeformt. Dies geschieht im Wesentlichen dadurch, dass jeder Vorsprung planare und/oder komplex geformte Flächen aufweist, welche gegenüber den benachbarten Anlageflächen sowie gegenüber den benachbarten Nebenschneidkanten geneigt sind, so dass in den Ecken des Schneideinsatzes jeweils mehrere Freiwinkel entstehen. Aufgrund der Anordnung bzw. Einformung der Freiwinkel in diese Vorsprünge muss der Schneideinsatz nicht allzu stark in sich verdreht werden, um eine Kollision mit den während der Bearbeitung nicht verwendeten Bauteilen des Schneideinsatzes wirksam zu vermeiden. Im Übrigen entstehen hierdurch wesentlich weniger komplex geformte Flächen auf der Außenhülle des Schneideinsatzes, im Vergleich dazu, wie dies beispielsweise bei dem aus der EP 1 572 407 B1 bekannten Schneideinsatz der Fall ist. Das macht die Fertigung des Schneideinsatzes einfacher und damit kostengünstiger.

Gemäß einer weiteren Ausgestaltung verlaufen die vier Nebenschneidkanten parallel zueinander und orthogonal zu den Hauptschneidkanten. Dies ist insbesondere für das Tangentialfräsen von Vorteil.

Erfindungsgemäß weist der Schneideinsatz genau vier identische Hauptschneidkanten auf, wobei an jeder Hauptseite genau eine der vier Hauptschneidkanten angeordnet ist. Ebenso weist der Schneideinsatz vorzugsweise genau vier identische Nebenschneidkanten auf, wobei an jeder Hauptseite genau eine der vier Nebenschneidkanten angeordnet ist. Die Hauptseiten sind vorzugsweise jeweils asymmetrisch ausgestaltet. Ebenso sind die Anlageflächen vorzugsweise jeweils asymmetrisch ausgestaltet. Nichtsdestotrotz erfüllt der gesamte Schneideinsatz die oben beschriebenen Symmetrieeigenschaften, nämlich eine 180°-Drehsymmetrie um die Bohrungsachse.

Gemäß einer bevorzugten Ausgestaltung der Erfindung hat der Schneideinsatz in einer Draufsicht entlang der Bohrungsachse betrachtet im Wesentlichen die Form eines Rhomboids. Unter einem "Rhomboid" wird ein Parallelogramm verstanden, welches vier Seiten aufweist. Die gegenüberliegenden Seiten dieses Parallelogramms sind parallel und gleich lang, wobei keine der vier Ecken einen rechten Winkel bildet. Die Summe aller Eckenwinkel beträgt jedoch 360°. Ein solches Rhomboid hat zwei Diagonalen, die unterschiedlich lang sind und sich schief, also nicht rechtwinklig, schneiden. Ein Rhomboid unterscheidet sich somit von einer gleichseitigen Raute.

Es sei jedoch angemerkt, dass der erfindungsgemäße Schneideinsatz in der beschriebenen Draufsicht nicht exakt die Form eines Rhomboids aufweist, insbesondere in den Ecken des Schneideinsatzes weicht dieser von der Idealform eines Rhomboids zumindest teilweise ab. Dies liegt im Wesentlichen an den bereits oben erwähnten Eckenkanten und Nebenschneidkanten, welche an den Ecken des Schneideinsatzes angeordnet sind.

Die rhombische Form des Schneideinsatzes hat im Wesentlichen den Vorteil, dass sich die geforderten Freilauf- und Symmetrieeigenschaften auf günstige Art und Weise realisieren lassen. Durch die im Wesentlichen rhombische Form des Schneideinsatzes entstehen relativ wenige komplex geformte Flächen, welche schwierig zu fertigen sind. Ebenso müssen nur wenige schräge oder konvexe Flächen in den Schneideinsatz eingeformt werden, was den Bearbeitungsaufwand während der Fertigung erheblich senkt.

Gemäß einer weiteren Ausgestaltung haben die Hauptschneidkanten einen geringeren Abstand von der Mittelebene als die Auflageflächen. Durch diesen Versatz zwischen den Auflageflächen und den Hauptschneidkanten entstehen zwischen den Hauptschneidkanten und den Auflageflächen jeweils eine im Wesentlichen planare Hauptfreifläche, welche gegenüber der imaginären Mittelebene geneigt ist, also nicht orthogonal zur zentralen Bohrungsachse verläuft. Diese vier planaren Hauptfreiflächen sind wiederum zur Gewährleistung der erforderlichen Freilaufeigenschaften des Schneideinsatzes notwendig, da ansonsten die Auflageflächen des Schneideinsatzes bei der Bearbeitung mit dem Werkstück kollidieren könnten. Der Neigungswinkel, den die Hauptfreiflächen mit der daran angrenzenden Auflagefläche einschließen ist vorzugsweise im Bereich von 2-10°, bevorzugt im Bereich von 4-6°.

Wie eingangs bereits erwähnt, bezieht sich die vorliegende Erfindung nicht nur auf den Schneideinsatz selbst, sondern auch auf ein Werkzeug zur spanenden Bearbeitung eines Werkstücks, insbesondere zum Tangentialfräsen, mit einem erfindungsgemäßen Schneideinsatz und mit mit einem Werkzeughalter, welcher mindestens eine Schneideinsatzaufnahme aufweist, in der der Schneideinsatz befestigt ist. Die oben genannten Ausgestaltungen gelten daher auch entsprechend bezüglich des Werkzeugs mit einem solchen Schneideinsatz.

An dieser Stelle sei angemerkt, dass die Verwendung des erfindungsgemäßen Schneideinsatzes vorliegend hauptsächlich am Beispiel eines Tangentialfräswerkzeugs beschrieben ist. Der erfindungsgemäße Schneideinsatz lässt sich grundsätzlich jedoch ebenso auch in Schaftfräsern oder in einem Drehhalter verwenden. Der erfindungsgemäße Schneideinsatz wie auch das beanspruchte Werkzeug sind daher nicht auf die vorliegend beschriebene Anwendung beschränkt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine perspektivische Ansicht einer beispielhaften Ausführungsform des erfindungsgemäßen Schneideinsatzes;
- Fig. 2: eine Draufsicht von oben auf die in Fig. 1 gezeigte Ausführungsform;
- Fig. 3: eine Draufsicht von einer ersten, in Fig. 1 verdeckten Seite auf die beispielhaften Ausführungsform;
- Fig. 4: eine Draufsicht von einer zweiten, in Fig. 1 verdeckten Seite auf die beispielhaften Ausführungsform;
- Fig. 5: eine Schnittansicht des in Fig. 2 angedeuteten Schnitts;
- Fig. 6: eine perspektivische Ansicht eines beispielhaften Werkzeughalters, in dem der erfindungsgemäße Schneideinsatz zum Einsatz kommen kann;
- Fig. 7: eine perspektivische Ansicht des in Fig. 6 gezeigten Werkzeughalters zusammen mit den darin eingesetzten Schneideinsätzen; und
- Fig. 8: eine Schnittansicht des in Fig. 7 gezeigten Werkzeughalters mit darin eingesetzten Schneideinsätzen.

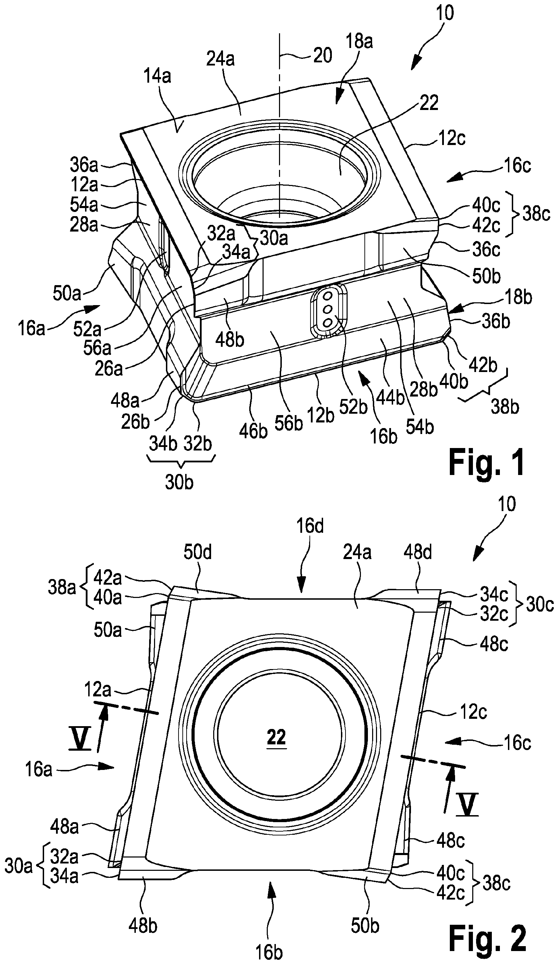

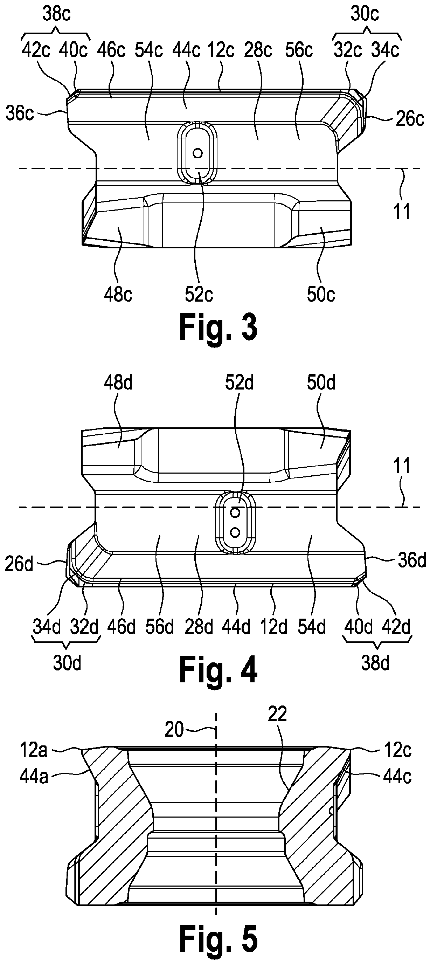

Die Fig. 1-5 zeigen eine beispielhafte Ausführungsform des erfindungsgemäßen Schneideinsatzes in verschiedenen Ansichten, wobei der Schneideinsatz jeweils gesamthaft mit der Bezugsziffer 10 gekennzeichnet ist. Aus der in Fig. 1 dargestellten perspektivischen Ansicht wird ersichtlich, dass es sich hierbei um eine vierschneidige Wendeschneidplatte 10 handelt, mit vier identischen, geraden Hauptschneidkanten 12a-12d (Hauptschneidkante 12d in Fig. 1 verdeckt dargestellt, siehe dazu z.B. Fig. 4).

Die äußere Form des Schneideinsatzes 10 wird durch insgesamt sechs Seiten begrenzt: Zwei einander gegenüberliegende Grundseiten 14a, 14b, welche die Ober- und Unterseite des Schneideinsatzes 10 bilden, sowie vier Hauptseiten 16a-16d, welche auch als Haupteinsatzseiten 16a-16d bezeichnet werden.

Die beiden Grundseiten 14a, 14b sind in dem vorliegenden Ausführungsbeispiel identisch zueinander ausgestaltet. Die vier Hauptseiten 16a-16d sind gemäß des vorliegenden Ausführungsbeispiels im Wesentlichen identisch zueinander ausgestaltet. Sie unterscheiden sich lediglich durch kleinere Markierungen, welche zur Kennzeichnung der jeweiligen Seite verwendet werden. Ansonsten sind sie lediglich spiegelverkehrt zueinander ausgestaltet. An jeder der Hauptseiten 16a-16d ist jeweils eine Hauptschneidkante 12a-12d angeordnet.

Die Gesamtgeometrie des erfindungsgemäßen Schneideinsatzes 10 lässt sich des Weiteren dadurch beschreiben, dass dieser zwei identische Teilkörper 18a, 18b aufweist, welche entlang einer imaginären Mittelebene 11 (siehe Fig. 3 und 4) integral miteinander verbunden sind. Die Aufteilungen in die beiden Teilkörper 18a, 18b dient vorliegend lediglich zur Vereinfachung der Beschreibung der Geometrie des Schneideinsatzes 10. Diese Aufteilung induziert jedoch nicht, dass es sich hierbei um zwei separate, also getrennte Bauteile handelt.

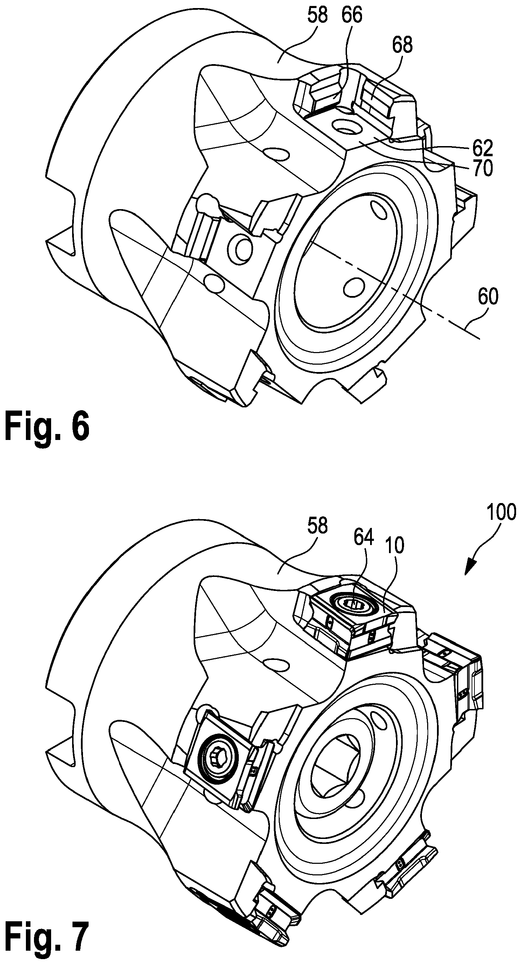

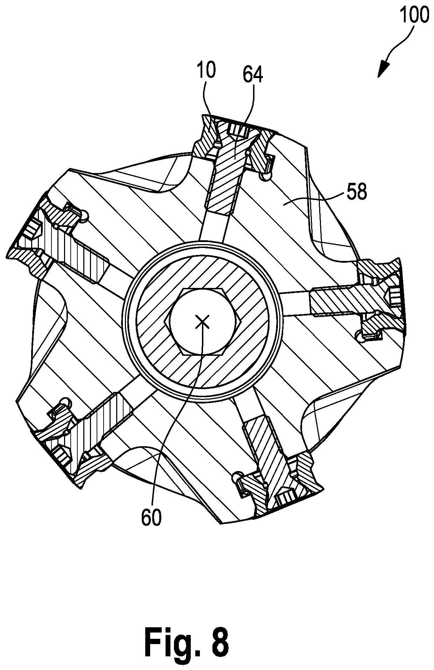

Der Schneideinsatz 10 weist eine entlang einer Bohrungsachse 20 durch beide Teilkörper 18a, 18b hindurch verlaufende Durchgangsbohrung 22 auf. Diese Durchgangsbohrung 22 dient der Aufnahme einer Schraube, mit Hilfe derer der Schneideinsatz 10 typischerweise an einem Werkzeughalter befestigt wird, wie dies beispielhaft aus den Fig. 7 und 8 hervorgeht.

Der geometrische Zusammenhang der beiden Teilkörper 18a, 18b des Schneideinsatzes 10 lässt sich wie folgt beschreiben: Die Mittelebene 11, entlang derer die beiden Teilkörper 18a, 18b miteinander verbunden sind, verläuft orthogonal zu der Bohrungsachse 20 der Durchgangsbohrung 22 und teilt den Schneideinsatz 10 in zwei gleichgroße Hälften. Der erste Teilkörper 18a lässt sich durch Rotation um 180° um eine in dieser Mittelebene 11 liegende Drehachse und eine anschließende Rotation um die Bohrungsachse 20 auf den zweiten Teilkörper 18b abbilden. Der Winkel der zweiten, gedachten Rotation entspricht dabei dem Winkel, welche die Hauptschneidkanten 12a, 12c des ersten Teilkörpers 18a mit den Hauptschneidkanten 12b, 12d des zweiten Teilkörpers 18b einschließen.

An jedem der beiden Teilkörper 18a, 18b sind jeweils zwei der insgesamt vier Hauptschneidkanten 12a-12d angeordnet. Die Hauptschneidkanten 12a-12d jedes Teilkörpers 18a, 18b verlaufen parallel zueinander, jedoch quer bzw. windschief zu den Hauptschneidkanten 12a-12d des jeweils anderen Teilkörpers 18a, 18b. Jeder Teilkörper 18a, 18b weist jeweils zwei identische, einander gegenüberliegende Teilkörper-Hauptseiten, an welchen die Hauptschneiden 12a-12d angeordnet sind, und zwei quer dazu verlaufende, ebenfalls einander gegenüberliegende, identische Teilkörper-Nebenseiten auf.

Aufgrund der zuvor beschriebenen Anordnung der beiden Teilkörper 18a, 18b relativ zueinander weist jede Hauptseite 16a-16d des Schneideinsatzes 10 jeweils eine Teilkörper-Hauptseite eines Teilkörpers 18a, 18b und eine Teilkörper-Nebenseite des entsprechend anderen Teilkörpers 18a, 18b auf. Die erste Hauptseite 16a des Schneideinsatzes 10 weist beispielsweise eine Teilkörper-Hauptseite des ersten Teilkörpers 18a auf, an der die erste Hauptschneidkante 12a angeordnet ist, und eine darunter angeordnete Teilkörper-Nebenseite des zweiten Teilkörpers 18b. Die zweite Hauptseite 16b des Schneideinsatzes 10 weist dagegen eine Teilkörper-Nebenseite des ersten Teilkörpers 18a und eine darunter angeordnete Teilkörper-Hauptseite des zweiten Teilkörpers 18b auf, an der die zweite Hauptschneidkante 12b angeordnet ist. Die dritte Hauptseite 16c des Schneideinsatzes 10 weist eine Teilkörper-Hauptseite des ersten Teilkörpers 18a auf, an der die dritte Hauptschneidkante 12c angeordnet ist, und eine darunter angeordnete Teilkörper-Nebenseite des zweiten Teilkörpers 18b. Die vierte Hauptseite 16d des Schneideinsatzes 10 weist eine Teilkörper-Nebenseite des ersten Teilkörpers 18a und darunter angeordnete Teilkörper-Hauptseite des zweiten Teilkörpers 18b auf, an der die vierte Hauptschneidkante 12d angeordnet ist.

Aufgrund der vier identischen Hauptseiten 16a-16d und der bereits erwähnten Symmetrieeigenschaften des Schneideinsatzes 10 lässt sich der Schneideinsatz 10 in vier verschiedenen Positionen im Werkzeughalter einsetzen, ohne dass es dabei zu einer Veränderung der Schnittgeometrie oder der Schnitteigenschaften kommt. Beispielsweise ließe sich zunächst die erste Hauptschneide 12a zur spanabhebenden Bearbeitung verwenden. Sobald diese verschlissen ist, kann der Schneideinsatz 10 um 180° um die Bohrungsachse 20 gedreht werden, so dass dann die Hauptschneide 12c zum Einsatz kommt. Um dann die beiden Hauptschneiden 12b und 12c zum Einsatz kommen zu lassen, muss der Schneideinsatz nur um 180° gewendet und in entsprechender Weise wieder am Werkzeughalter befestigt werden.

In befestigtem Zustand liegt der Schneideinsatz 10 entweder mit einer an der ersten Grundseite 14a vorgesehenen, planaren Auflagefläche 24a oder mit einer auf der gegenüberliegenden, zweiten Grundseite 14b vorgesehenen zweiten Auflagefläche 24b plan auf dem Werkzeughalter auf. Die beiden Auflageflächen 24a, 24b verlaufen parallel zueinander und orthogonal zu der Bohrungsachse 20. Beide Auflageflächen 24a, 24b haben den gleichen Abstand von der imaginären Mittelebene 11.

Neben jeder Hauptschneidkante 12a-12d weist jede Hauptseite 16a-16d des Schneideinsatzes 10 zusätzlich eine Nebenschneidkante 26a-26d auf. Der Schneideinsatz 10 weist also insgesamt vier Nebenschneidkanten 26a-26d auf. Ähnlich wie bei den Hauptschneidkanten 12a-12d handelt es sich bei den Nebenschneidkanten 26a-26d ebenfalls um gerade bzw. ungekrümmte Schneidkanten. Diese verlaufen vorzugsweise parallel zueinander. Bevorzugt sind die Nebenschneidkanten 26a-26d orthogonal zu den Hauptschneidkanten 12a-12d bzw. parallel zu der Bohrungsachse 20 ausgerichtet. Jeder der beiden Teilkörper 18a, 18b des Schneideinsatzes 10 weist somit jeweils zwei Hauptschneidkanten 12a-12d und zwei Nebenschneidkanten 26a-26d auf.

Die vier Hauptschneidkanten 12a-12d sind jeweils mit der an derselben Hauptseite 16a-16d angeordneten Nebenschneidkante 26a-26d in einer gemeinsamen imaginären Schneidenebene angeordnet. Daher existieren insgesamt vier dieser imaginären Schneidenebenen, wovon jeweils zwei parallel zueinander ausgerichtet sind. Die vier imaginären Schneidenebenen sind jedoch allesamt orthogonal zu der imaginären Mittelebene 11 und den beiden Auflageflächen 24a, 24b ausgerichtet. Gegenüber diesen imaginären Schneidenebenen etwas nach innen versetzt, also zur zentralen Bohrungsachse 20 hin, weist jede Hauptseite 16a-16d des Schneideinsatzes 10 ferner jeweils eine planare Anlagefläche 28a-28d auf. Die zuvor beschriebenen, imaginären Schneidenebenen verlaufen jeweils parallel zu der jeweils an derselben Hauptseite 16a-16d angeordneten Anlagefläche 28a-28d, so dass also die Haupt- und Nebenschneidkanten 12a-12d und 26a-26d jeder Hauptseite 16a-16d jeweils parallel zu der an derselben Hauptseite 16a-16d angeordneten Anlagefläche 28a-28d verlaufen.

Im in den Werkzeughalter eingebauten Zustand liegt der erfindungsgemäße Schneideinsatz 10 vorzugsweise mit zwei der Anlagefläche 28a-28d am Werkzeughalter an und mit einer der beiden Auflageflächen 24a, 24b auf dem Werkzeughalter plan auf.

Aufgrund der jeweils größeren Entfernung der Schneidenebenen von der Bohrungsachse 20 im Vergleich zu den Anlageflächen 28a-28d ergibt sich an jeder Hauptseite 16a-16d des Schneideinsatzes 10 eine Art Spanmulde, welche sich zwischen der an der jeweils selben Hauptseite 16a-16d angeordneten Hauptschneidkanten 12a-12d, der entsprechenden Nebenschneidkante 26a-26d und der entsprechenden Anlagefläche 28a-28d ergibt. Jede dieser Spanmulden ist jeweils auf einer Seite der jeweiligen Hauptschneidkante 12a-12d geschlossen (in Fig. 3 auf der rechten Seite der Hauptschneidkante 12c und in Fig. 4 auf der linken Seite der Hauptschneidkante 12d) und auf der gegenüberliegenden Seite der jeweiligen Hauptschneidkante 12a-12d geöffnet (in Fig. 3 auf der linken Seite der Hauptschneidkante 12c und in Fig. 4 auf der rechten Seite der Hauptschneidkante 12d). Auf der Seite, auf der die beschriebene Spanmulde jeweils eine geschlossene Kontur aufweist, entsteht bei der Verwendung des Schneideinsatzes typischerweise der Hauptteil der Spanbildung, wohingegen auf der Seite, an der die Spanmulde eine geöffnete Kontur aufweist, ein Großteil des gebildeten Spanes nach außen hin abfließt.

Jeder der vier Hauptschneidkanten 12a-12d ist auf der "geschlossenen" Seite jeweils über eine erste Eckenkante 30a-30d mit einer der vier Nebenschneidkanten 26a-26d verbunden. Bei dieser ersten Eckenkante 30a-30d handelt es sich in dem vorliegend gezeigten Ausführungsbeispiel jeweils um eine Kombination aus einem Radius 32a-32d und einer daran anschließenden Fase 34a-34d. Alternativ dazu kann die erste Eckenkante 30a-30d jeweils auch nur durch einen Radius oder nur durch eine Fase ausgestaltet sein.

Die ersten Eckenkanten 30a-30d sind unabhängig davon ebenfalls in den zuvor beschriebenen, jeweiligen Schneidenebenen angeordnet, in der auch die an der jeweils gleichen Hauptseite 16a-16d angeordneten Haupt- und Nebenschneidkanten 12a-12d und 26a-26d angeordnet sind.

Auf der gegenüberliegenden "offenen" Seite jeder Hauptschneidkante 12a-12d befindet sich anstelle einer Nebenschneidkante vorzugsweise eine Seitenkante 36a-36d, welche nicht als Schneidkante eingesetzt wird und dementsprechend nicht geschliffen sein muss. Die Seitenkanten 36a-36c sind vorzugsweise als gerade bzw. ungekrümmte Kanten ausgebildet. Die Seitenkanten 36a-36c können entweder direkt oder über einen Radius und/oder eine Fase mit der jeweiligen Hauptseitenkante 12a-12d verbunden sein. In dem vorliegenden Ausführungsbeispiel sind die Seitenkanten 36a-36d über eine zweite Eckenkante 38a-38d, welche sowohl einen Radius 40a-40d als auch eine Fase 42a-42d aufweist, mit der jeweiligen Hauptschneidkante 12a-12d verbunden.

Die Seitenkanten 36a-36d sind mit ihren jeweiligen ersten Enden jeweils mit einer zweiten Eckenkante 38a-38d verbunden. An ihren jeweils gegenüberliegenden zweiten Enden grenzen die Seitenkanten 36a-36d jeweils vorzugsweise unmittelbar an die an derselben Hauptseite 16a-16d angeordnete Anlagefläche 28a-28d an. Die Seitenkanten 36a-36d verlaufen ausgehend von den zweiten Eckenkanten 38a-38d sozusagen also nach hinten weg, wodurch die oben beschriebene "offene" Seite der Spanmuldenkontur entsteht.

Zwischen jeder Hauptschneidkante 12a-12d und der an derselben Hauptseite 16a-16d angeordneten Anlagefläche 28a-28d ist jeweils eine planare Spanfläche 44a-44d angeordnet. Des Weiteren ist an jeder Hauptseite 16a-16d jeweils eine zumindest teilweise umlaufende Fase vorgesehen, welche sich durchgängig entlang der an der jeweiligen Hauptseite 16a-16d angeordneten zweiten Eckenkante 38a-38d, der Hauptschneidkante 12a-12d, der ersten Eckenkante 30a-30d sowie entlang der Nebenschneidkante 26a-26d erstreckt und an die jeweils benachbarte Spanfläche 44a-44d angrenzt. Diese teilweise umlaufende Fase 46a-46d dient als Schutzfase für die Schneidkanten.

Des Weiteren ist aus den Zeichnungen ersichtlich, dass an jeder Hauptseite 16a-16d jeweils ein erster Vorsprung 48a-48d sowie ein zweiter Vorsprung 50a-50d angeordnet sind, welche gegenüber den Anlageflächen 28a-28d hervorspringen.

An jedem der vier ersten Vorsprünge 48a-48d ist jeweils eine der vier ersten Eckenkanten 30a-30d und eine der vier Nebenschneidkanten 26a-26d angeordnet, und zwar jeweils eine Eckenkante 30a-30d und Nebenschneidkante 26a-26d einer benachbarten Hauptseite 16a-16d.

An jedem der vier zweiten Vorsprünge 50a-50d ist jeweils eine der vier zweiten Eckenkanten 38a-38d und eine der vier Seitenkanten 36a-36d angeordnet, und zwar jeweils eine Eckenkante 38a-38d und eine Seitenkante 36a-36d einer benachbarten Hauptseite 16a-16d.

Die ersten und zweiten Vorsprünge 48a-48d und 50a-50d sind jeweils an den Teilkörper-Nebenseiten angeordnet. In die ersten Vorsprünge 48a-48d sind die Freiwinkel der Nebenschneidkanten 26a-26d eingeformt.

Die Anlageflächen 28a-28d sind gemäß der in den Figuren gezeigten Ausführungsform jeweils durch eine Vertiefung 52a-52d in zwei Teilflächen 54a-54d und 56a-56d aufgeteilt. Durch diese Aufteilung der Anlageflächen 28a-28d wird der Plattensitz verbessert, da hierdurch eine Art Zwei-Punkt-Anlage bzw. Zwei-Ebenen-Anlage entsteht.

Innerhalb der Vertiefungen 52a-52d sind gemäß der gezeigten Ausführungsform Markierungen vorgesehen, welche die jeweilige Hauptseite 16a-16d des Schneideinsatzes 10 kennzeichnen bzw. nummerieren.

Die Fig. 6-8 zeigen ein beispielhaftes Werkzeug, in dem der erfindungsgemäß Schneideinsatz 10 typischerweise Verwendung findet. Das Werkzeug ist gesamthaft mit der Bezugsziffer 100 bezeichnet.

Das beispielhaft dargestellte Werkzeug ist im vorliegenden Fall ein Tangentialfräswerkzeug. Dieses Werkzeug 100 weist einen Werkzeughalter 58 auf, welcher rotationssymmetrisch zu einer Drehachse 60 ist. An dem Werkzeughalter 58 ist umfangsseitig mindestens eine, vorzugsweise eine Vielzahl von Schneideinsatzaufnahmen 62 vorgesehen, welche als Aufnahme für jeweils einen Schneideinsatz 10 fungieren. Jede der Schneideinsätze 10 ist mit einer Schraube 64 an dem Werkzeughalter 58 lösbar befestigt.

In Fig. 6 sind die konstruktiven Details der Schneideinsatzaufnahme 62 ersichtlich. Die Schneideinsatzaufnahme 62 weist jeweils zwei Anlageflächen 66, 68 und eine Auflagefläche 70 auf, an denen der Schneideinsatz 10 an- bzw. aufliegt. Der Schneideinsatz 10 liegt also mit jeweils einer seiner Anlageflächen 28a-28d an der Anlagefläche 66 des Werkzeughalters an, mit jeweils einer weiteren Anlagefläche 28a-28d an der Anlagefläche 68 des Werkzeughalters an und liegt mit einer seiner beiden Auflageflächen 24a, 24b auf der Auflagefläche 70 des Werkzeughalters 58 auf.

## Patentansprüche

1. Schneideinsatz (10) für ein Werkzeug zur spanenden Bearbeitung eines Werkstücks, wobei der Schneideinsatz (10) folgende Merkmale aufweist:
- zwei im Wesentlichen identische Teilkörper (18a, 18b), nämlich einen ersten Teilkörper (18a) und einen zweiten Teilkörper (18b);
- eine entlang einer Bohrungsachse (20) durch beide Teilkörper (18a, 18b) verlaufende Durchgangsbohrung (22);
- zwei im Wesentlichen identische, einander gegenüberliegende Grundseiten (14a, 14b), nämlich eine erste Grundseite (14a), welche Teil des ersten Teilkörpers (18a) ist und eine erste planare Auflagefläche (24a) aufweist, die orthogonal zu der Bohrungsachse (20) verläuft, und eine zweite Grundseite (14b), welche Teil des zweiten Teilkörpers (18b) ist und eine zweite planare Auflagefläche (24b) aufweist, die orthogonal zu der Bohrungsachse (20) verläuft;
- vier im Wesentlichen identische Hauptseiten (16a-16d), welche sich zwischen den beiden Grundseiten (14a, 14b) erstrecken, wobei jede der vier Hauptseiten (16a-16d) jeweils eine planare Anlagefläche (28a-28d) aufweist, welche orthogonal zu der ersten und der zweiten Auflagefläche (24a, 24b) verläuft;
- genau vier identische gerade Hauptschneidkanten (12a-12d), wobei an jeder der vier Hauptseiten (16a-16d) jeweils genau eine der vier Hauptschneidkanten (12a-12d) angeordnet ist und jeder der beiden Teilkörper (18a, 18b) jeweils zwei der vier Hauptschneidkanten (12a-12d) aufweist, wobei die beiden Hauptschneidkanten (12a, 12c) des ersten Teilkörpers (18a) parallel zueinander verlaufen, und wobei die beiden Hauptschneidkanten (12b, 12d) des zweiten Teilkörpers (18b) parallel zueinander und in einem spitzen Winkel zu den Hauptschneidkanten (12a, 12c) des ersten Teilkörpers (18a) verlaufen;
- vier gerade Nebenschneidkanten (26a-26d), wobei an jeder der vier Hauptseiten (16a-16d) jeweils eine der vier Nebenschneidkanten (26a-26d) angeordnet ist und jeder der beiden Teilkörper (18a, 18b) jeweils zwei der vier Nebenschneidkanten (26a-26d) aufweist, und wobei die Nebenschneidkanten (26a-26d) quer zu den Hauptschneidkanten (12a-12d) verlaufen;
wobei die beiden Teilkörper (18a, 18b) entlang einer Mittelebene (11) miteinander verbunden sind, welche orthogonal zu der Bohrungsachse (20) verläuft und jeweils den gleichen Abstand zu der ersten Auflagefläche (24a) und der zweiten Auflagefläche (24b) hat, und wobei sich der erste Teilkörper (18a) durch Rotation um 180° um eine in der Mittelebene (11) liegende Drehachse und eine anschließende Rotation um den spitzen Winkel um die Bohrungsachse (20) auf den zweiten Teilkörper (18b) abbilden lässt,
wobei jede der vier Hauptschneidkanten (12a-12d) jeweils an einem ersten Ende über eine erste Eckenkante (30a-30d), welche einen Radius (32a-32d) und/oder eine Fase (34a-34d) aufweist, mit einer der vier Nebenschneidkanten (26a-26d) verbunden ist, welche an derselben Hauptseite (16a-16d) angeordnet ist,
wobei jede der vier Hauptschneidkanten (12a-12d) jeweils mit der an derselben Hauptseite (16a-16d) angeordneten Nebenschneidkante (26a-26d) in einer gemeinsamen Schneidenebene angeordnet ist, die parallel zu der an derselben Hauptseite (16a-16d) angeordneten Anlagefläche (28a-28d) ausgerichtet ist,
**dadurch gekennzeichnet, dass** die an derselben Hauptseite (16a-16d) angeordnete Anlagefläche (28a-28d) gegenüber der Schneidenebene nach innen, also zu der Bohrungsachse (20) hin, versetzt ist, und
wobei an jeder Hauptseite (16a-16d) jeweils ein erster Vorsprung (48a-48d) und ein zweiter Vorsprung (50a-50d) angeordnet sind, die auf gegenüberliegenden Seiten der jeweiligen Hauptseite (16a-16d) angeordnet sind und gegenüber der Anlagefläche (28a-28d) der jeweiligen Hauptseite (16a-16d) hervorstehen, wobei an jedem der ersten Vorsprünge (48a-48d) jeweils die Eckenkante (30a-30d) und die Nebenschneidkante (26a-26d) der benachbarten Hauptseite (16a-16d) angeordnet sind.

2. Schneideinsatz nach Anspruch 1, wobei jede der vier Hauptschneidkanten (12a-12d) jeweils an einem zweiten Ende entweder direkt oder über eine zweite Eckenkante (38a-38d), welche einen Radius (40a-40d) und/oder eine Fase (42a-42d) aufweist, mit einer Seitenkante (36a-36d) verbunden ist, wobei jede der vier Seitenkanten (36a-36d) nicht in der jeweiligen Schneidenebene angeordnet ist, in der die Hauptschneidkante (12a-12d) und Nebenschneidkante (26a-26d) derselben Hauptseite (16a-16d) angeordnet sind.

3. Schneideinsatz nach Anspruch 2, wobei ein erstes Ende jeder Seitenkante (36a-36d) entweder direkt oder über die entsprechende zweite Eckenkante (38a-38d) mit der an derselben Hauptseite (16a-16d) angeordneten Hauptschneidkante (12a-12d) verbunden ist, und wobei ein zweites Ende jeder Seitenkante (36a-36d) direkt, über einen Radius oder über eine Fase mit einem Rand der an derselben Hauptseite (16a-16d) angeordneten Anlagefläche (28a-28d) verbunden ist, und wobei die vier Anlageflächen (28a-28d) jeweils einen kürzeren Abstand von der Bohrungsachse (20) haben als die vier Schneidenebenen.

4. Schneideinsatz nach einem der Ansprüche 1-3, wobei zwischen jeder Hauptschneidkante (12a-12d) und der jeweils an derselben Hauptseite (16a-16d) angeordneten Anlagefläche (28a-28d) eine planare Spanfläche (44a-44d) angeordnet ist.

5. Schneideinsatz nach den Ansprüchen 2 und 4, wobei an jeder Hauptseite (16a-16d) eine zumindest teilweise umlaufende Fase (46a-46d) angeordnet ist, welche sich durchgängig entlang der an der jeweiligen Hauptseite (16a-16d) angeordneten zweiten Eckenkante (38a-38d), der Hauptschneidkante (12a-12d), der ersten Eckenkante (30a-30d) und der Nebenschneidkante (26a-26d) erstreckt und an die an derselben Hauptseite (16a-16d) angeordnete Spanfläche (44a-44d) angrenzt.

6. Schneideinsatz nach einem der Ansprüche 1-5, wobei die Mittelebene (11) alle vier Anlageflächen (28a-28d) schneidet, so dass ein Teil jeder Anlagefläche (28a-28d) zu dem ersten Teilkörper (18a) gehört und ein anderer Teil jeder Anlagefläche (28a-28d) zu dem zweiten Teilkörper (18b) gehört.

7. Schneideinsatz nach einem der Ansprüche 1-6, wobei jede der vier Anlageflächen (28a-28d) jeweils zwei planare Teilflächen (54a-54d; 56a-56d) aufweist, welche durch eine Vertiefung (52a-52d) voneinander getrennt sind.

8. Schneideinsatz nach einem der Ansprüche 1-7, wobei die vier Nebenschneidkanten (26a-26d) parallel zueinander und orthogonal zu den Hauptschneidkanten (12a-12d) verlaufen.

9. Schneideinsatz nach einem der Ansprüche 1-8, wobei der Schneideinsatz (10) genau vier identische Nebenschneidkanten (26a-26d) aufweist und an jeder Hauptseite (16a-16d) genau eine der Nebenschneidkanten (26a-26d) angeordnet ist.

10. Schneideinsatz nach einem der Ansprüche 1-9, wobei die Hauptseiten (16a-16d) und die Anlageflächen (28a-28d) jeweils asymmetrisch sind.

11. Schneideinsatz nach einem der Ansprüche 1-10, wobei der Schneideinsatz (10) in einer Draufsicht entlang der Bohrungsachse (20) betrachtet im Wesentlichen die Form eines Rhomboids hat.

12. Schneideinsatz nach einem der Ansprüche 1-11, wobei die Hauptschneidkanten (12a-12d) einen geringeren Abstand von der Mittelebene (11) haben als die Auflageflächen (24a-24d).

13. Werkzeug (100) zur spanenden Bearbeitung eines Werkstücks, insbesondere zum Tangentialfräsen, mit einem Schneideinsatz (10) nach einem der Ansprüche 1 bis 12 und mit einem Werkzeughalter (58), welcher mindestens eine Schneideinsatzaufnahme (62) aufweist, in der der Schneideinsatz (10) lösbar befestigt ist.

## Claims

1. A cutting insert (10) for a tool for machining a workpiece, wherein the cutting insert (10) comprises the following features:
- two substantially identical parts (18a, 18b), namely a first part (18a) and a second part (18b);
- a through-bore (22) which runs through both parts (18a, 18b) along a bore axis (20);
- two substantially identical, oppositely arranged base sides (14a, 14b), namely a first base side (14a) which is part of the first part (18a) and comprises a first planar support surface (24a) which runs orthogonally to the bore axis (20), and a second base side (14b) which is part of the second part (18b) and comprises a second planar support surface (24b) which runs orthogonally to the bore axis (20);
- four substantially identical main sides (16a-16d) which extend between the two base sides (14a, 14b), wherein each of the four main sides (16a-16d) comprises a planar contact surface (28a-28d) which runs orthogonally to the first and the second support surface (24a, 24b);
- precisely four identical rectilinear main cutting edges (12a-12d), wherein one of the precisely four main cutting edges (12a-12d) is arranged on each of the four main sides (16a-16d), respectively, and each of the two parts (18a, 18b) comprises two of the four main cutting edges (12a-12d), respectively, wherein the two main cutting edges (12a, 12c) of the first part (18a) run parallel to one another, and wherein the two main cutting edges (12b, 12d) of the second part (18b) run parallel to one another and at an acute angle to the main cutting edges (12a, 12c) of the first part (18a);
- four rectilinear secondary cutting edges (26a-26d), wherein one of the four secondary cutting edges (26a-26d) is arranged on each of the four main sides (16a-16d), respectively, and each of the two parts (18a, 18b) comprises two of the four secondary cutting edges (26a-26d), respectively, and wherein the secondary cutting edges (26a-26d) run transversely to the main cutting edges (12a-12d);
wherein the two parts (18a, 18b) are connected together along a center plane (11) which runs orthogonally to the bore axis (20) and at an identical distance from the first support surface (24a) and the second support surface (24b), respectively, and wherein the first part (18a) can be projected onto the second part (18b) as a result of rotation by 180° about a rotational axis lying in the center plane (11) and a subsequent rotation by the acute angle about the bore axis (20);
wherein each of the four main cutting edges (12a-12d) is connected at a first end to one of the four secondary cutting edges (26a-26d), which is arranged on the respective same main side (16a-16d), via a first corner edge (30a-30d), which comprises a radius (32a-32d) and/or a chamfer (34a-34d),
wherein each of the four main cutting edges (12a-12d) is arranged with the secondary cutting edge (26a-26d), arranged on the respective same main side (16a-16d), in a common cutting plane which is aligned parallel to the contact surface (28a-28d) arranged on the respective same main side (16a-16d),
**characterized in that** the contact surface (28a-28d) arranged on the respective same main side (16a-16d) is offset inward relative to the cutting plane, that is to say towards the bore axis (20), and
wherein on each main side (16a-16d) a first projection (48a-48d) and a second projection (50a-50d) are arranged, respectively, which are arranged on oppositely arranged sides of the respective main side (16a-16d) and protrude in relation to the contact surface (28a-28d) of the respective main side (16a-16d), wherein on each of the first projection (48a-48d) the corner edge (30a-30d) and the secondary cutting edge (26a-26d) of the adjacent main side (16a-16d) is arranged, respectively.

2. The cutting insert as claimed in claim 1, wherein each of the four main cutting edges (12a-12d) is connected in each case at a second end to a side edge (36a-36d) either directly or via a second corner edge (38a-38d) which comprises a radius (40a-40d) and/or a chamfer (42a-42d), wherein each of the four side edges (36a-36d) is not arranged in the respective cutting plane in which the main cutting edge (12a-12d) and secondary cutting edge (26a-26d) of the respective same main side (16a-16d) are arranged.

3. The cutting insert as claimed in claim 2, wherein a first end of each side edge (36a-36d) is connected either directly or via the corresponding second corner edge (38a-38d) to the main cutting edge (12a-12d) arranged on the same main side (16a-16d), and wherein a second end of each side edge (36a-36d) is connected directly, via a radius or via a chamfer to an edge of the contact surface (28a-28d) arranged on the same main side (16a-16d), and wherein the four contact surfaces (28a-28d) are at a shorter distance from the bore axis (20) than the four cutting planes.

4. The cutting insert as claimed in one of claims 1-3, wherein a planar chip surface (44a-44d) is arranged between each main cutting edge (12a-12d) and the contact surface (28a-28d) arranged in each case on the same main side (16a-16d).

5. The cutting insert as claimed in claims 2 and 4, wherein an at least partially circumferential chamfer (46a-46d), which extends continuously along the second corner edge (38a-38d), arranged on the respective main side (16a-16d), the main cutting edge (12a-12d), the first corner edge (30a-30d) and the secondary cutting edge (26a-26d) and abuts against the chip surface (44a-44d) arranged on the same main side (16a-16d), is arranged on each main side (16a-16d).

6. The cutting insert as claimed in one of claims 1-5, wherein the center plane (11) intersects all four contact surfaces (28a-28d) so that part of each contact surface (28a-28d) is associated with the first part (18a) and another part of each contact surface (28a-28d) is associated with the second part (18b).

7. The cutting insert as claimed in one of claims 1-6, wherein each of the four contact surfaces (28a-28d) comprises two planar part surfaces (54a-54d; 56a-56d), respectively, which are separated from one another by an indentation (52a-52d).

8. The cutting insert as claimed in one of claims 1-7, wherein the four secondary cutting edges (26a-26d) run parallel to one another and orthogonally to the main cutting edges (12a-12d).

9. The cutting insert as claimed in one of claims 1-8, wherein the cutting insert (10) comprises precisely four identical secondary cutting edges (26a-26d) and precisely one of the secondary cutting edges (26a-26d) is arranged on each main side (16a-16d), respectively.

10. The cutting insert as claimed in one of claims 1-9, wherein each of the main sides (16a-16d) and each of the contact surfaces (28a-28d) are asymmetrical.

11. The cutting insert as claimed in one of claims 1-10, wherein, when viewed in plan view along the bore axis (20), the cutting insert (10) has a form substantially of a rhomboid.

12. The cutting insert as claimed in one of claims 1-11, wherein the main cutting edges (12a-12d) are at a smaller distance from the center plane (11) than the support surfaces (24a-24d).

13. A tool (100) for machining a workpiece, in particular for tangential milling, having a cutting insert (10) as claimed in one of claims 1 to 12 and having a tool holder (58) which comprises at least one cutting insert receptacle (62) in which the cutting insert (10) is releasably fastened.

## Revendications

1. Plaquette de coupe (10) pour un outil d'usinage par enlèvement de copeaux d'une pièce à travailler, la plaquette de coupe (10) présentant les caractéristiques suivantes :
- deux parties de corps (18a, 18b) essentiellement identiques, à savoir une première partie de corps (18a) et une deuxième partie de corps (18b) ;
- un alésage traversant (22) s'étendant le long d'un axe d'alésage (20) à travers les deux parties de corps (18a, 18b) ;
- deux côtés de base (14a, 14b) sensiblement identiques et opposés l'un à l'autre, à savoir un premier côté de base (14a) qui fait partie de la première partie de corps (18a) et qui présente une première surface d'appui plane (24a) qui s'étend orthogonalement à l'axe d'alésage (20), et un deuxième côté de base (14b) qui fait partie de la deuxième partie de corps (18b) et qui présente une deuxième surface d'appui plane (24b) qui s'étend orthogonalement à l'axe d'alésage (20) ;
- quatre côtés principaux (16a-16d) sensiblement identiques, s'étendant entre les deux côtés de base (14a, 14b), chacun des quatre côtés principaux (16a-16d) présentant une surface d'appui plane respective (28a-28d) qui est orthogonale à la première et à la deuxième surface d'appui (24a, 24b) ;
- exactement quatre arêtes de coupe principales droites identiques (12a-12d), exactement une des quatre arêtes de coupe principales (12a-12d) étant agencée sur chacun des quatre côtés principaux (16a-16d), et chacune des deux parties de corps (18a, 18b) présentant respectivement deux des quatre arêtes de coupe principales (12a-12d), les deux arêtes de coupe principales (12a, 12c) de la première partie de corps (18a) étant parallèles entre elles, et les deux arêtes de coupe principales (12b, 12d) de la deuxième partie de corps (18b) étant parallèles entre elles et formant un angle aigu avec les arêtes de coupe principales (12a, 12c) de la première partie de corps (18a) ;
- quatre arêtes de coupe secondaires droites (26a-26d), une des quatre arêtes de coupe secondaires (26a-26d) étant aménagée sur chacun des quatre côtés principaux (16a-16d) respectivement, et chacune des deux parties de corps (18a, 18b) présentant respectivement deux des quatre arêtes de coupe secondaires (26a-26d), et les arêtes de coupe secondaires (26a-26d) s'étendant transversalement aux arêtes de coupe principales (12a-12d) ;
les deux parties de corps (18a, 18b) étant reliées l'une à l'autre le long d'un plan médian (11) qui s'étend orthogonalement à l'axe d'alésage (20) et qui se trouve à la même distance de la première surface d'appui (24a) et de la deuxième surface d'appui (24b), et la première partie de corps (18a) reproduisant la deuxième partie de corps (18b) par une rotation de 180° autour d'un axe de rotation situé dans le plan médian (11) et par une rotation consécutive de l'angle aigu autour de l'axe d'alésage (20),
chacune des quatre arêtes de coupe principales (12a-12d) étant respectivement reliée à une première extrémité, par une première arête de coin (30a-30d) qui présente un rayon (32a-32d) et/ou un chanfrein (34a-34d), à l'une des quatre arêtes de coupe secondaires (26a-26d), qui est agencée sur le même côté principal (16a-16d),
chacune des quatre arêtes de coupe principales (12a-12d) étant respectivement agencée avec l'arête de coupe secondaire (26a-26d) agencée sur le même côté principal (16a-16d) dans un plan de coupe commun, qui est orienté parallèlement à la surface d'appui (28a-28d) agencée sur le même côté principal (16a-16d),
**caractérisée en ce que** la surface d'appui (28a-28d) agencée sur le même côté principal (16a-16d) est décalée vers l'intérieur par rapport au plan de coupe, c'est-à-dire vers l'axe d'alésage (20), et
une première saillie (48a-48d) et une deuxième saillie (50a-50d) sont chacune agencées sur chaque côté principal (16a-16d), lesquelles sont agencées sur des côtés opposés du côté principal respectif (16a-16d) et font saillie par rapport à la surface d'appui (28a-28d) du côté principal respectif (16a-16d), l'arête de coin (30a-30d) et l'arête de coupe secondaire (26a-26d) du côté principal adjacent (16a-16d) étant respectivement aménagées sur chacune des premières saillies (48a-48d).

2. Plaquette de coupe selon la revendication 1, dans laquelle chacune des quatre arêtes de coupe principales (12a-12d) est reliée, à une deuxième extrémité, soit directement, soit par l'intermédiaire d'une deuxième arête de coin (38a-38d), qui présente un rayon (40a-40d) et/ou un chanfrein (42a-42d), à une arête latérale (36a-36d), chacune des quatre arêtes latérales (36a-36d) n'étant pas située dans le plan de coupe respectif dans lequel l'arête de coupe principale (12a-12d) et l'arête de coupe secondaire (26a-26d) du même côté principal (16a-16d) sont aménagées.

3. Plaquette de coupe selon la revendication 2, dans laquelle une première extrémité de chaque arête latérale (36a-36d) est reliée à l'arête de coupe principale (12a-12d) aménagée sur le même côté principal (16a-16d), soit directement, soit par l'intermédiaire de la deuxième arête de coin correspondante (38a-38d), et dans laquelle une deuxième extrémité de chaque arête latérale (36a-36d) est reliée directement, par un rayon ou par un chanfrein, à un bord de la surface d'appui (28a-28d) aménagé sur le même côté principal (16a-16d), et dans laquelle les quatre surfaces d'appui (28a-28d) ont chacune une distance plus courte par rapport à l'axe d'alésage (20) que les quatre plans de coupe.

4. Plaquette de coupe selon l'une des revendications 1 à 3, dans laquelle une face de coupe plane (44a-44d) est aménagée entre chaque arête de coupe principale (12a-12d) et la face d'appui (28a-28d) respective aménagée sur le même côté principal (16a-16d).

5. Plaquette de coupe selon les revendications 2 et 4, dans laquelle un chanfrein (46a-46d) au moins partiellement périphérique est aménagé sur chaque côté principal (16a-16d), lequel s'étend de manière continue le long de la deuxième arête de coin (38a-38d) aménagée sur le côté principal respectif (16a-16d), de l'arête de coupe principale (12a-12d), de la première arête de coin (30a-30d) et de l'arête de coupe secondaire (26a-26d), et est adjacent à la face de coupe (44a-44d) aménagée sur le même côté principal (16a-16d).

6. Plaquette de coupe selon l'une des revendications 1 à 5, dans laquelle le plan médian (11) coupe les quatre faces d'appui (28a-28d), de sorte qu'une partie de chaque face d'appui (28a-28d) appartienne à la première partie de corps (18a) et qu'une autre partie de chaque face d'appui (28a-28d) appartienne à la deuxième partie de corps (18b).

7. Plaquette de coupe selon l'une des revendications 1 à 6, dans laquelle chacune des quatre faces d'appui (28a-28d) comprend respectivement deux parties de surfaces planes (54a-54d ; 56a-56d) séparées par un renfoncement (52a-52d).

8. Plaquette de coupe selon l'une des revendications 1 à 7, dans laquelle les quatre arêtes de coupe secondaires (26a-26d) sont parallèles entre elles et orthogonales aux arêtes de coupe principales (12a-12d).

9. Plaquette de coupe selon l'une des revendications 1 à 8, la plaquette de coupe (10) présentant exactement quatre arêtes de coupe secondaires (26a-26d) identiques et exactement une des arêtes de coupe secondaires (26a-26d) étant aménagée sur chaque côté principal (16a-16d).

10. Plaquette de coupe selon l'une des revendications 1 à 9, dans laquelle les côtés principaux (16a-16d) et les faces d'appui (28a-28d) sont respectivement asymétriques.

11. Plaquette de coupe selon l'une des revendications 1 à 10, la plaquette de coupe (10) ayant une forme sensiblement rhomboïde lorsqu'elle est vue de dessus selon l'axe d'alésage (20).

12. Plaquette de coupe selon l'une des revendications 1 à 11, dans laquelle les arêtes de coupe principales (12a-12d) sont à une distance plus petite du plan médian (11) que les surfaces d'appui (24a-24d).

13. Outil (100) pour l'usinage d'une pièce à travailler par enlèvement de copeaux, en particulier pour un usinage tangentiel, avec une plaquette de coupe (10) selon l'une des revendications 1 à 12 et avec un porte-outil (58) qui présente au moins un logement (62) de plaquette de coupe dans lequel la plaquette de coupe (10) est fixée de manière amovible.
